# EUROPÄISCHE PATENTSCHRIFT

(11) **EP 0 423 606 B1**
(45) Veröffentlichungstag und Bekanntmachung des Hinweises auf die Patenterteilung: **05.01.1994**
(21) Anmeldenummer: 90119413.4
(22) Anmeldetag: 10.10.1990
(51) Int. Cl.: B09B 3/00, B07B 1/00

(54) **Verfahren zur Aufbereitung von Haushalts-, Gewerbe- und anderen vergleichbaren Abfällen mit Gewinnung eines Cellulosematerials**
Process for the preparation of domestic, industrial or similar waste for the extraction of cellulose materials
Procédé de traitement des ordures ménagères, des déchets industriels et des analogues en obtenant des matériaux cellulosiques

(30) Priorität: 16.10.1989 DE 3934478
(43) Veröffentlichungstag der Anmeldung: 24.04.1991
(73) Patentinhaber: ORGAN-FASER TECHNOLOGY COMPANY N.V., Curaçao (AN)
(72) Erfinder: Frei, Josef, CH-5422 Oberehrendingen (CH)
(74) Vertreter: Körber, Wolfhart, Dr.rer.nat.

(56) Entgegenhaltungen:
- CH-A- 650 172

## Beschreibung

Die vorliegende Erfindung betrifft ein Verfahren zur Aufbereitung von Haushalts-, Gewerbe- und anderen vergleichbaren Abfällen mit Gewinnung eines Cellulosematerials, bei welchem das Abfallmaterial einer Vorzerkleinerung, Magnetabscheidung, Sichtung und Fraktionierung unterworfen wird. Solche Verfahren sind beispielsweise in DE-PS 31 05 597, US-PS 4,623,515 und US-PS 4,815,668 beschrieben.

Auf diesem Stand der Technik aufbauend besteht das Grundprinzip der beschriebenen Erfindung darin, daß die bei der Sichtung ausgetragene, aus Papier, Textilien und Kunststoffen bestehende Leichtfraktion einer Waschstation zugeführt wird und die gewaschenen Flugstoffe in einen Pulper gelangen, das im Anschluß an die Behandlung im Pulper mittels einer Siebung die Ballaststoffe entfernt werden und die das Sieb passierenden, in Wasser verteilten Celluloseteilchen als Pulpe unmittelbar oder nach Abpressung von Wasser einer ggfs. angegliederten Papierfabrik zugeführt werden bzw. die abgepreßten Celluloseteilchen getrocknet und als Pulver gewonnen werden.

Zusätzlich zu diesem Vorgehen gestattet es die vorgeschlagene Art der Aufbereitung weitere Fraktionen in vorteilhafter Weise abzutrennen. Dabei handelt es sich neben der Rückgewinnung von Metallen und mineralischen Bestandteilen um die Erzeugung von Methangas aus den leicht abbaubaren Schmutzstoffen und Umsetzung der restlichen Feststoffe in Agrarprodukte sowie Aufarbeitung der nicht abbaubaren Energiestoffe in lagerfähige und brennbare Stoffe.

Bekanntlich existieren heute noch weltweit Abfallentsorgungsprobleme, speziell bei gemischten Abfällen aus Haushaltungen, Gewerbe und teils auch Fabriken. Die Problematik besteht aus zwei Hauptmerkmalen:
a) Emissionsfreie Entsorgung,
b) Rückgewinnung der wiederverwertbaren, teils hochwertigen Inhaltsstoffe.

Zur Entsorgung sind einige Methoden bekannt und bereits in Anwendung, wie z.B.:
- Verbrennung mit Energienutzung
- Deponierung mit Gasgewinnung
- Aufbereitung mit Kompost- und/oder Brennstoff-Gewinnung
- Getrennte Sammlung von Teilkomponenten wie Metall, Glas, Papier und Gartenabfälle
- Handsortierung an Lesebändern für Teilkomponenten-Gewinnung
- Recycling Systeme zur Herstellung von Faser- und Granulat-Fraktionen als Zwischen- bzw. Zuschlag-Stoffe in einschlägige Produkte-Herstellungen (DE-PS 31 05 597, US-PS 4,623,515 und US-PS 4,815,668).

Alle diese Entsorgungsmethoden und Technologien sind aber mit gewissen Nachteilen belastet wie:
- Mangelhafte Produkte-Qualität
- Teillösungen durch unvollständige Konzepte
- zu große Reststoffanfälle
- teilweise Unwirtschaftlichkeit, verursacht durch hohe Energie- und Betriebskosten
- zu hohe Umweltbelastungen.

Ebenfalls sind Systeme bekannt, die sortierte Abfallstoffe, wie oben bereits erwähnt, als Sekundärrohstoffe in speziellen Prozessen teilweise mitverwenden. Im speziellen handelt es sich hier um Papierabfälle aus getrennten Sammlungen oder Handsortierungen. Die herkömmlichen Papierrecycling-Systeme sind aber nur Teillösungen und ebenfalls mit Nachteilen belastet.

Die nachteiligen Auswirkungen sind folgende:
1. Feste Reststoffe fallen in den Pulpeherstellungen mit ca. 30% der Input-Altpapiere an, verursacht durch den großen Verschmutzungsgrad der Altpapiere durch Plastik, Holz, Textilien und andere organische Abfälle.
   Diese Ballaststoffe müssen heute mit großen Kostenfolgen entsorgt (deponiert oder verbrannt) werden. Obschon diese Ballaste hohe Heizwerte aufweisen, müssen sie mit viel Energie in den brennbaren Bereich versetzt werden, um die Inhalts-Energie zu nutzen; oder müssen andererseits in speziellen Deponien abgelagert werden, womit die vorhandene Energie verloren geht.
2. Schmutzbeladene Schlammwasser werden verursacht durch leicht verrotbare und faulbare Substanzen aus den mit Pflanzen- und Speise-Abfällen verschmierten Abfallpapieren. Die Feststoffe dieser Schmutzschlämme weisen recht hohe Energiewerte auf und müssen bis heute in speziellen Deponien gelagert oder thermisch behandelt und verbrannt werden.
   Beide Varianten sind kostenintensiv und unwirtschaftlich.

Die vorstehenden Ausführungen beweisen deutlich, daß bezüglich Entsorgung, Stoffverwertung und Nutzung nur Teillösungen mit vielen Nachteilen bekannt bzw. verfügbar sind. Demzufolge besteht die Aufgabe, ein Verfahren mit Einrichtung zu entwickeln, um nicht sortierte Haus- / Gewerbe-Abfälle mit geringstem Aufwand und größter Nutzung in zum Teil hochwertige Produkte umzusetzen.

Erfindungsgemäß sollen die Abfälle so behandelt werden, daß für die Allgemeinheit wichtige Produkte erzeugt werden, wie:
- Metalle für die Wiederverwertung
- Minerale für die Bauindustrie
- Methan-Gas
- Agrar-Produkte Dünger- und Trägerstoffe
- feste Brennstoffe
- Energie elektrisch und thermisch für Eigenbedarf
- Cellulose-Pulver für Träger und Additive
- Papierpulpe für Papier- und Karton-Herstellung

Im gemischten Hausmüll beträgt der Papieranteil (trotz getrennter Sammlung) 15 bis 30 Gew.-%.

Erfindungsgemäß werden diese sonst verlorenen Cellulosen maschinell aus dem gemischten Abfall herausgelöst und in wiederverwertbare Produkte, wie Pulpe oder Pulver, umgearbeitet. Weiterhin werden aus den leicht abbaubaren Schmutzstoffen ein stapelbares Methangas erzeugt und die restlichen Feststoffe in Agrarprodukte umgesetzt. Weiterhin werden die nicht abbaubaren Energiestoffe in lagerfähige und brennbare Stoffe aufgearbeitet und die mineralischen und metallischen Bestandteile so aussortiert, daß sie der Wiederverwertung zugeführt werden können.

Die Erfindung wird durch die nachstehenden Ausführungen in Verbindung mit dem Fließschema näher erläutert.

Der eingesammelte gemischte Hausmüll wird von den Sammelfahrzeugen in den Bunker 1 abgekippt. Mittels mechanischer Förderung gelangt der Müll in Position 2, die Vorzerkleinerung mittels eines Shredders. Dieser hat die Aufgabe, den Müll aufzuschließen und auf ca. max. 20 x 30cm vorzuzerkleinern. Ein Elektromagnet 3, der über die Fördereinrichtung zwischen 2 und 4 plaziert ist, entzieht dem Materialstrom die Eisenmetalle. Die ausgezogenen Eisenmetalle gelangen in die Reinigungsstufe 5, die den Schrott von Schmutzstoffen befreit. Die gereinigten Metalle gelangen zu 6, mit Pakettierung oder Füllung in Container und anschließender Weitergabe an die einschlägige Wiederverwertung. Die von 5 ausgeschiedenen Schmutzstoffe sind zur Hauptsache organische Substanzen und werden via Förderung zur Entgasung in den Bio-Reaktor 19 geleitet.

Dieser Bioreaktor 19 ist eine handelsübliche Einrichtung und hat die Aufgabe, die flüchtigen Substanzen im organischen Teil in Gas umzusetzen und von den organischen Feststoffen abzutrennen. Die Gase werden so aufbereitet und gereinigt, daß sie via 20 als lagerfähige und in Behältern transportable Brenngase vermarktet werden können.

Die Feststoffe aus 19 gelangen in die Siebung 21, die das Material in 2 Fraktionen auftrennt. Feingut wird in 22 zu Dünge-Produkte aufgearbeitet. Das Grobgut, was zum Teil aus nicht entgasbaren Energieteilen besteht, gelangt in eine Mischstation 23, wo es mit anderen Energieträgern aus 11 und eventuell 4 vermischt wird. Die Mischung wird zu 24, der Presse, geleitet. Die Presse 24 ist ein marktübliches Gerät und hat die Aufgabe, das feuchte Mischgut unter Druck zu entwässern und in brennbare Briketts umzuwandeln. Die Brennstoffe können via 25 dem öffentlichen Markt zugeführt werden, oder direkt oder zum Teil in 26, einem Hochtemperatur-Zweistufenbrenner, direkt in Wärme umgesetzt werden.

Die Wärme kann einerseits in Wärmeverbundnetze 27 geliefert und/oder andererseits via 28 in das eigene Verbrauchsnetz als Selbstversorgung geleitet werden. Z.B. kann der Pulpetrockner 12 versorgt werden. Die Asche aus 26 muß via 29 deponiert oder weiteraufbereitet werden.

Das von Eisenmetallen befreite Material wird in dem Sortierer 4 in 2 Fraktionen getrennt. Die dort abgetrennte Schwerfraktion besteht aus Mineralien und feuchten, organischen Stoffen (nicht flugfähig) und wird in einen Wassersichter 16 geleitet. Der Wassersichter 16 hat die Aufgabe, die Minerale und Ne-Metalle von den organischen Stoffen zu trennen. Die gereinigten Schwerstoffe können in 17 in Ne-Metalle und Minerale getrennt und der Wiederverwertung zugeführt werden. Die organischen Stoffe werden mit dem Wasser aus Position 16 in ein Absetzbecken 18 geleitet. Position 18 trennt die organischen Stoffe vom Wasser. Die organischen Stoffe werden dem bereits beschriebenen Reaktor 19 zugeführt. Das Wasser wird dem Sichter 16 und der Waschanlage 7 rückgeführt (Kreislauf).

Die flugfähige Fraktion wird aus dem Sortierer 4 der Waschanlage 7 zugeführt. Sie kann auch, oder wenigstens Teile davon, via Bypass dem Mischer 23 zugeleitet werden, um dort den Heizwert und die Feuchtigkeit zu beeinflussen.

Die Waschanlage 7 hat die Aufgabe, die an den Flugstoffen anhaftenden organischen Schmutzstoffe auszuwaschen. Die Schmutzstoffe gelangen mit dem Waschwasser in das bereits beschriebene Absetzbecken 18. Das Reinwasser wird, wie schon erwähnt, rückgeführt zu 16 und 7.

Die gewaschenen Flugstoffe, hauptsächlich Papiere aller Art, Textilien und Kunststoffe, werden dem Pulper 8 zugeführt. Die Pulper 8 (die auch als Nasszerfaserer oder Breimühlen bezeichnet werden) sind handelsübliche Geräte. In diese, in der Regel mit 30 bis 50°C warmem Wasser gefüllten Geräte wird das Gut unter einem sehr hohen Wasserüberschuß (Verhältnis etwa 5 : 95% Wasser) eingebracht. Unter der Wirbelwirkung des rotierenden Wassers werden die eingezogenen Papiere zerkleinert und aufgefasert. Insoweit "lösen" sich bei diesem nassen Mahlprozeß die in der Flugfraktion enthaltenen Papiere in die einzelnen Cellulosefasern. Das so erhaltene Pulpe-Textil-Kunststoff-Gemisch wird in das Sieb 9 gepumpt. Das Sieb 9 ist eine Unterwassersiebung und trennt die Pulpe von den Ballaststoffen. Das Abwasser aus der Siebung wird einer Kläranlage 30 zugeführt. Das Reinwasser wird erneut dem Pulper 8 zugeleitet. Die organischen Schlämme gelangen in den bereits beschriebenen Reaktor 19.

Die Ballaststoffe aus Sieb 9 werden in der Siebpresse 11 zur Hauptsache vom Wasser getrennt und dem schon erwähnten Mischer 23 zugeführt.

Das Schmutzwasser wird dem ebenfalls beschriebenen Absetzbecken 18 zugeleitet. Die aus Sieb 9 ausgetragene Pulpe wird einer Presse 10 zugeführt. Die Presse 10 entwässert die Pulpe in den tropffreien Zustand, damit sie mit dem regulären LKW den Papierfabriken 13 zugeführt. werden kann. Das Presswasser aus der Presse 10 wird ebenfalls der beschriebenen Kläranlage 30 zugeführt.

Die ausgepreßte Pulpe aus 10 kann parallel einer Trocknung und Pulverisierung 12 zugeführt werden. Die Energie dafür wird aus dem Selbstversorgungs-System 26, 28 bezogen. Das trockene Cellulosepulver wird als hochwertige Träger oder Additive via 14 den einschlägigen Industrien zugeführt.

Vorteilhaft wird die Papierherstellung 13, 14, 15 direkt mit der erfindungsgemäßen Aufarbeitung verbunden, damit die dort entstehenden Abwässer ebenfalls via Kläranlage 30 oder Absetzbecken 18 entsorgt und die Schmutzstoffe mitverwertet werden können und damit auch die Abschnitte und Produktionsabfälle aus der Papierherstellung wieder rückgeführt und recycliert werden.

Durch die erfindungsgemäße Aufbereitung erzielt man viele Vorteile, und zwar:
1. Ohne Handsortierung wird Cellulose aus dem Gemischtmüll gewonnen,
2. die im Abfall vorhandenen Wertstoffe werden vollständig genützt,
3. es fällt nur ein kleinster Anteil an deponiebedürftigen Abfällen aus des Müll (max. 3% Asche) an,
4. es besteht nur ein minimalster Energieaufwand bei der Verarbeitung,
5. es werden Wertstoffe mit hohem Qualitätstandard gewonnen,
6. das System ist nicht abhängig von der Müllzusammensetzung,
7. das Verfahren ist nicht an einzelne Produktemärkte gebunden,
8. es können erstmals schadstoffarme Agrarprodukte aus Hausmüll hergestellt werden,
9. es entfallen in den Papierproduktionen die Entsorgungsprobleme der nicht verwertbaren Stoffe (üblicherweise sind 30% vom Input Deponiegut),
10. das Verfahren ist überall, wo Müll anfällt, anwendbar.

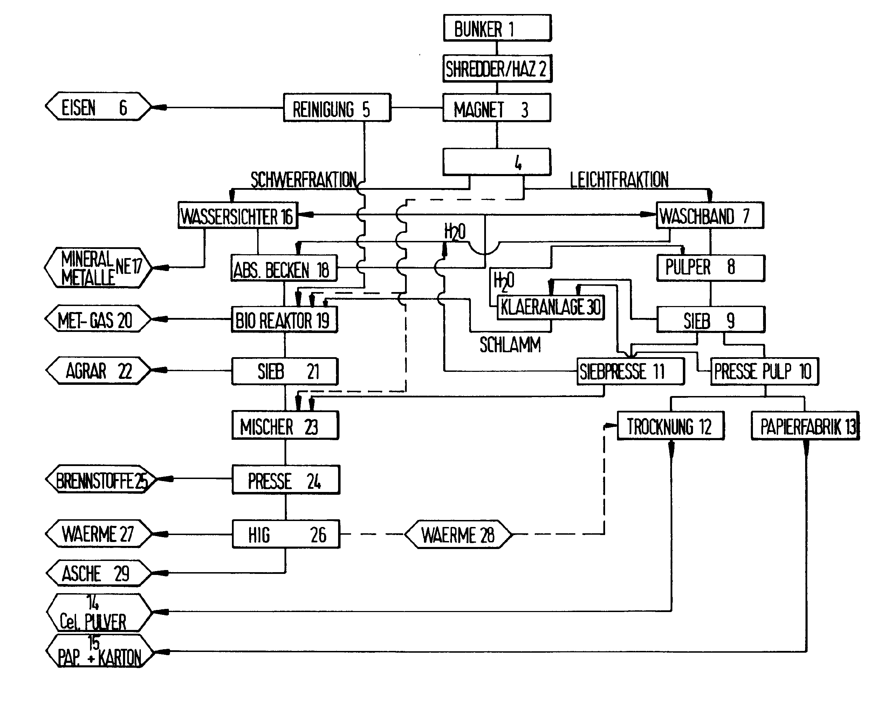

## Patentansprüche

1. Verfahren zur Aufbereitung von Haushalts-, Gewerbe- und anderen vergleichbaren Abfällen mit Gewinnung eines Cellulosematerials, bei welchem das Abfallmaterial einer Vorzerkleinerung, Magnetabscheidung, Scihtung und Fraktionierung unterworfen wird,
dadurch gekennzeichnet, daß die bei der Sichtung ausgetragene, aus Papier, Textilien und Kunststoffen bestehende Leichtfraktion einer Waschstation zugeführt wird und die gewaschenen Flugstoffe in einen Pulper gelangen, daß im Anschluß an die Behandlung im Pulper mittels einer Siebung die Ballaststoffe entfernt werden und die das Sieb passierenden, im Wasser verteilten Celluloseteilchen als Pulpe unmittelbar oder nach Abpressung vom Wasser einer ggfs. angegliederten Papierfabrik zugeführt werden bzw. die abgepreßten Celluloseteilchen getrocknet und als Pulver gewonnen werden.

2. Weitere Ausbildung des Verfahrens gemäß Patentanspruch 1, dadurch gekennzeichnet, daß die bei der Durchführung des Verfahrens anfallenden, leicht abbaubaren Schmutzstoffe gesammelt werden und daraus in einem Bioreaktor Methangas erzeugt wird.

3. Weitere Ausbildung des Verfahrens gemäß Patentansprüchen 1 und 2, dadurch gekennzeichnet, daß die im Bioreaktor nicht umgesetzten Stoffe durch eine Siebung in zwei Fraktionen aufgetrennt werden, das dabei erhaltene Feingut zu Dünge-Produkten aufgearbeitet wird und das Grobgut - nach eventuellem Zusatz von an anderen Stellen, z.B. bei der Siebung im Anschluß an die Behandlung im Pulper anfallenden Energieträgern - in einer Presse entwässert und in feste Brennstoffe überführt wird.

## Claims

1. Method for processing domestic, industrial and other like waste with the production of a cellulose material, in which the waste material is subjected to pre-comminution, magnetic separation, air-classification and fractionation, characterised in that the light fraction consisting of paper, textiles and plastics material separated in the air-classification is passed to a washing station and the washed air-floatable materials passed into a pulper, the ballast substances are removed following the treatment in the pulper by means of screening and the cellulose particles suspended in the water that pass the screen are introduced as pulp directly or after pressing out the water to a paper mill that may be associated with the plant or the pressed cellulose particles are dried and recovered as powder.

2. A further development of the method according to claim 1, characterised in that the readily decomposable contaminants that arise in the course of the method are collected and methane gas is produced therefrom in a bioreactor.

3. A further development of the method according to claim 1 and 2, characterised in that the substances that are not decomposed in the bioreactor are separated by screening into two fractions, the fine fraction is processed into fertilizer products and the coarse fraction, if desired after addition of energy carriers arising elsewhere, e.g. in the screening following the treatment in the pulper, is de-watered in a press and is converted into solid fuel.

## Revendications

1. Procédé de traitement d'ordures ménagères, de déchets industriels et d'autres déchets analogues, avec récupération d'une matière cellulosique, dans lequel les déchets sont soumis à un déchiquetage préalable, à une séparation magnétique, à un tamisage et à un fractionnement, **caractérisé** en ce que la fraction légère extraite du tamisage, se composant de papier, de textiles et de matières plastiques, est conduite à une station de lavage et les matières volatiles lavées parviennent dans un pulpeur, en ce qu'à la suite du traitement dans le pulpeur, les matières inertes sont éliminées par tamisage et les particules de cellulose traversant le tamis, en suspension dans l'eau, sont envoyées sous la forme de pâte à papier, directement ou après essorage, à une fabrique de papier, annexée le cas échéant, ou bien les particules de cellulose essorées sont séchées et récupérées sous la forme de poudre.

2. Autre forme de mise en oeuvre du procédé selon la revendication 1, caractérisée en ce que les impuretés facilement décomposables séparées lors de la mise en oeuvre du procédé sont recueillies et du gaz méthane est produit à partir de ces impuretés dans un bio-réacteur.

3. Autre forme de mise en oeuvre du procédé selon les revendications 1 et 2, caractérisée en ce que les matières non décomposées dans le bio-réacteur sont séparées par tamisage en deux fractions, la fraction fine obtenue dans cette séparation étant transformée en engrais et la fraction grosse étant, après addition éventuelle de vecteurs d'énergie obtenus, par exemple, lors du tamisage faisant suite au traitement dans le pulpeur, essorée dans une presse et convertie en combustibles solides.
